# FASCICULE DE BREVET EUROPEEN

(11) **EP 3 110 993 B1**
(45) Date de publication et mention de la délivrance du brevet: **02.01.2019**
(21) Numéro de dépôt: 15709293.3
(22) Date de dépôt: 20.02.2015
(51) Int. Cl.: D02G 3/16

(54) **FIL ENSIMÉ DESTINÉ À SUBIR UNE OPÉRATION TEXTILE**
GESCHLICHTETES GARN FÜR TEXTILEN BETRIEB
SIZED YARN INTENDED TO UNDERGO A TEXTILE OPERATION

(30) Priorité: 28.02.2014 FR 1451646
(43) Date de publication de la demande: 04.01.2017
(73) Titulaire: Safran Ceramics, 33185 Le Haillan (FR)
(72) Inventeur: HUGUET, Chrystel, F-33460 Margaux (FR); LOISON, Sylvie, F-33160 Saint Medard En Jalles (FR); EVRARD, Hervé, F-33185 Le Haillan (FR)
(74) Mandataire: Laïk, Eric
(86) Numéro de dépôt international: PCT/FR2015/050419
(87) Numéro de publication internationale: WO 2015/128569

(56) Documents cités:
- EP-A1- 1 837 424
- FR-A1- 2 983 193
- US-A- 5 571 442
- US-A1- 2014 030 076

## Description

### Arrière-plan de l'invention

L'invention concerne des fils ensimés destinés à subir une ou plusieurs opérations textiles ainsi que des procédés associés.

Les fils comportant une pluralité de fibres de SiC ou de carbone peuvent subir des opérations textiles et, en particulier, des opérations de tissage afin de former des structures fibreuses. La porosité de ces structures fibreuses peut ensuite être comblée par une matrice afin d'obtenir des pièces en matériau composite dans lesquelles la structure fibreuse a une fonction de renfort mécanique.

Les documents US 2014/0030076 et FR 2 983 193 décrivent la réalisation de pièces en matériau composite. Le document US 5 571 442 décrit des compositions de traitement textile.

Toutefois, lorsque les fibres des fils sont recouvertes d'un revêtement d'interphase la mise en oeuvre des opérations textiles peut conduire à un endommagement du revêtement d'interphase.

Il serait souhaitable que des fils à base de fibres recouvertes d'un revêtement d'interphase puissent être traités afin de conférer au revêtement d'interphase une protection satisfaisante lors des opérations textiles. Il serait aussi souhaitable que ce traitement n'affecte pas la souplesse et, en particulier, la tissabilité des fils traités.

En outre, il serait aussi avantageux que le dépôt protecteur résultant d'un tel traitement puisse être facilement éliminé une fois les opérations textiles réalisées.

A la connaissance des inventeurs, il n'existe pas à l'heure actuelle de traitement de fils à base de fibres recouvertes d'un revêtement d'interphase qui présenterait les propriétés avantageuses mentionnées ci-dessus.

Il existe donc un besoin pour disposer d'un traitement de protection de fils à base de fibres recouvertes d'un revêtement d'interphase permettant aux fils de conserver après traitement la possibilité de subir une opération textile tout en permettant d'assurer la protection du revêtement d'interphase durant ladite opération textile.

En particulier, il existe un besoin pour disposer d'un traitement de protection de fils à base de fibres recouvertes d'un revêtement d'interphase permettant aux fils de conserver après traitement une souplesse et une tissabilité satisfaisantes tout en permettant d'assurer la protection du revêtement d'interphase durant les opérations de tissage.

Il existe encore un besoin pour disposer d'un traitement de protection de fils à base de fibres recouvertes d'un revêtement d'interphase conduisant à un revêtement protecteur pouvant être facilement éliminé.

### Objet et résumé de l'invention

A cet effet, l'invention propose, selon un premier aspect, un fil ensimé destiné à subir une opération textile comportant :
- une pluralité de fibres céramiques et/ou de carbone,
- un revêtement d'interphase recouvrant les fibres, et
- un film recouvrant le revêtement d'interphase comportant un polysiloxane à chaîne linéaire.

Par « polysiloxane », il faut comprendre un polymère comportant une chaîne de structure chimique du type -(SiR₁R₂O)ₙ- où R₁ et R₂ sont des substituants reliés au silicium et n est le nombre de répétition des motifs siloxanes et est un entier supérieur ou égal 2. Dans le cadre de l'invention n est choisi de manière à ce que le polysiloxane soit liquide à température ambiante (20°C). Un tel choix de n permet avantageusement de faciliter l'étalement du polysiloxane sur les fibres recouvertes du revêtement d'interphase.

Le fait d'utiliser un polysiloxane à chaîne linéaire permet aussi d'obtenir un bon étalement du polymère sur les fibres recouvertes du revêtement d'interphase et se traduit par la formation d'un film protecteur sur les fibres traitées.

Les inventeurs ont constaté que la présence d'un film comportant un polysiloxane à chaîne linéaire permettait avantageusement d'obtenir un fil suffisamment souple pour pouvoir subir de manière satisfaisante une ou plusieurs opérations textiles tout en assurant une protection du revêtement d'interphase, lors de la ou des opérations textiles.

Le fil peut par exemple être destiné à être tissé mais, comme il sera détaillé plus bas, le fil selon l'invention peut encore être mis en oeuvre dans d'autres types d'opérations textiles.

En particulier, les inventeurs ont constaté que la présence d'un film comportant un polysiloxane à chaîne linéaire permettait avantageusement d'obtenir un fil conservant un caractère souple et tissable tout en assurant une protection du revêtement d'interphase lors des opérations de tissage.

Le choix de ces familles de polymère à chaîne linéaire permet, en outre, avantageusement d'obtenir un revêtement pouvant facilement être éliminé après les opérations textiles. En effet, la mise en oeuvre de ces polymères à chaîne linéaire permet avantageusement lorsque le film est soumis à un traitement thermique d'obtenir une décomposition thermique quasi-totale et ainsi de fortement limiter la quantité de dépôts résiduels non souhaités. Ainsi, plus de 90%, voire plus de 95%, de la masse du film peut être éliminée lors d'un traitement thermique d'une durée de 4 heures à une température de 900°C sous atmosphère neutre.

Par ailleurs, le revêtement d'interphase permet avantageusement d'accroître la résistance mécanique des fibres lorsque celles-ci constituent un renfort fibreux présent au sein d'une matrice en permettant notamment une déviation des fissures éventuelles de la matrice afin que celles-ci n'affectent pas l'intégrité des fibres.

Dans un exemple de réalisation, le revêtement d'interphase peut être discontinu c'est-à-dire qu'il n'y a pas de continuité de matière entre les interphases recouvrant chacune des fibres. Le revêtement d'interphase est alors formé par la réunion de l'ensemble des interphases recouvrant chacune des fibres. Dans ce cas, une interphase a tout d'abord été formée sur chacune des fibres puis les fibres ont été regroupées en fil et le film a ensuite été formé.

En variante, les fibres ont d'abord été regroupées en fil, puis le revêtement d'interphase a été formé et le film a ensuite été formé. Il est préférable dans le cadre de l'invention de former le revêtement d'interphase après que les fibres aient été regroupées en fil.

Les fibres céramiques peuvent comporter des fibres de type oxyde, par exemple des fibres Nextel 610 et/ou des fibres Nextel 720 de la société 3M, des fibres de type nitrure, des fibres de type carbure, par exemple de SiC, et des mélanges de telles fibres.

Dans un exemple de réalisation, les fibres comportent des fibres de SiC. En particulier, l'intégralité des fibres peuvent être des fibres de SiC.

En variante, les fibres comportent des fibres de carbone. En particulier, l'intégralité des fibres peuvent être des fibres de carbone.

Dans un exemple de réalisation, les fibres comportent à la fois des fibres de SiC et des fibres de carbone.

Dans un exemple de réalisation, le polysiloxane comporte une chaîne de structure chimique du type -(SiR₁R₂O)ₙ- où n est tel que défini plus haut et R₁ et R₂ représentent, indépendamment l'un de l'autre : un atome d'hydrogène, un atome d'halogène, un groupement -OH, une chaîne hydrocarbonée aliphatique, saturée ou insaturée, comportant de 1 à 30 atomes de carbone, interrompue ou non par un ou plusieurs hétéroatomes ou par un ou plusieurs groupements carbonyles, non substituée ou substituée, un groupement aryle ou aralkyle ayant un nombre d'atomes de carbone inférieur ou égal à 30, ou un groupement - OR₃ où R₃ représente un groupement alkyle, alcène, alcyne, aryle ou aralkyle comportant de 1 à 30 atomes de carbone.

Dans un exemple de réalisation, le polysiloxane a une formule chimique du type X-(SiR₁R₂O)ₙ-Y où R₁ et R₂ et n sont tels que définis plus haut et X et Y sont les groupes terminaux du polymère. X et Y peuvent être quelconques, en particulier ils peuvent être choisis parmi : -CH₃, - Si(CH₃)₃ ou -OH.

De préférence, le polysiloxane peut être un poly(diméthylsiloxane) (PDMS) à chaîne linéaire. Dans ce cas, le polymère comporte une structure chimique du type -(Si(CH₃)₂O)ₙ- où n est tel que défini plus haut.

En particulier, le polysiloxane peut avoir la formule chimique suivante : X-[Si(CH₃)₂O]ₙ-Y où X et Y sont les groupements terminaux du polymère et n est tel que défini plus haut. En particulier, le polysiloxane peut avoir la formule chimique suivante : CH₃[Si(CH₃)₂O]ₙSi(CH₃)₃ où n est tel que défini plus haut.

Dans un exemple de réalisation, le revêtement d'interphase peut comporter, notamment consister en, du carbone pyrolytique (PyC), du carbone dopé au bore (BC) ou du BN. En particulier le revêtement d'interphase peut comporter, notamment consister en, du Pyrocarbone dopé par du bore.

De préférence, le rapport [masse de polysiloxane]/[masse des fibres + masse du revêtement d'interphase] peut être supérieur ou égal à 0,3%, par exemple à 0,5%, par exemple à 1%.

De préférence, le rapport [masse de polysiloxane]/[masse des fibres + masse du revêtement d'interphase] peut être inférieur ou égal à 5%.

Il est avantageux de ne pas dépasser la valeur de 5% pour ce rapport afin de limiter l'encrassement des machines textiles qui peuvent être employées par la suite pour réaliser les opérations textiles.

De préférence, le rapport [masse de polysiloxane]/[masse des fibres + masse du revêtement d'interphase] peut être compris entre 0,3% et 5%, de préférence entre 0,3% et 3,0%, par exemple entre 0,3% et 1%.

La présente invention vise également un ensemble de fils comportant une pluralité de fils tels que définis plus haut.

La présente invention vise également un procédé de préparation d'un fil tel que défini plus haut, comportant une étape de traitement par une composition d'ensimage d'une pluralité de fibres céramiques et/ou de carbone recouvertes d'un revêtement d'interphase, la composition d'ensimage comportant un polysiloxane à chaîne linéaire.

La fibre, le revêtement d'interphase et le polysiloxane présent dans la composition d'ensimage peuvent être tels que décrits plus haut.

Dans un exemple de réalisation, la composition d'ensimage est sous la forme d'une émulsion, par exemple d'une émulsion huile dans eau. Dans ce cas, le polysiloxane est présent dans une phase huileuse de l'émulsion. En variante, la composition d'ensimage est une solution dans laquelle le polysiloxane est présent. Le solvant de cette solution peut, par exemple, être choisi parmi : l'acétone, le perchloroéthylène ou le dichlorométhane. En variante encore, la composition d'ensimage est sous la forme d'une huile comportant le polysiloxane.

De préférence, le rapport [masse de polysiloxane déposée]/[masse des fibres revêtues du revêtement d'interphase traitées] peut être supérieur ou égal à 0,3%, par exemple à 0,5%, par exemple à 1%. De préférence, le rapport [masse de polysiloxane déposée]/[masse des fibres revêtues du revêtement d'interphase traitées] peut être inférieur ou égal à 5%.

De préférence, le rapport [masse de polysiloxane déposée]/[masse des fibres revêtues du revêtement d'interphase traitées] peut être compris entre 0,3% et 5%, de préférence entre 0,3% et 3,0%, par exemple entre 0,3% et 1%.

Le dépôt de la composition d'ensimage peut se faire par toute méthode connue comme le plein bain, le rouleau lécheur ou la pulvérisation. On peut ensuite effectuer une étape de séchage, celle-ci permettant d'éliminer tout ou partie du solvant ou de l'eau initialement présents dans la composition d'ensimage.

Dans un exemple de réalisation, les fibres peuvent présenter, avant le traitement par la composition d'ensimage, un revêtement d'ensimage initial, le revêtement d'ensimage initial étant éliminé en tout ou partie avant le traitement par la composition d'ensimage.

Ce revêtement d'ensimage initial peut, par exemple, être éliminé par traitement thermique.

Il est donc possible dans le cadre de l'invention de partir d'un fil ayant un revêtement d'ensimage initial sous-optimal ne conférant pas la souplesse et le degré de protection requis des fibres et du revêtement d'interphase. Ce revêtement d'ensimage initial peut être éliminé puis le fil peut être traité par la composition d'ensimage afin de former un fil selon l'invention ayant des propriétés satisfaisantes de résistance aux opérations textiles.

La présente invention vise également un procédé de fabrication d'une structure fibreuse dans lequel une ou plusieurs opérations textiles mettant en oeuvre au moins un fil tel que défini plus haut sont réalisées.

Dans un exemple de réalisation, une structure tissée peut être fabriquée par tissage d'une pluralité de fils tels que définis plus haut.

Dans un exemple de réalisation, les fils peuvent être guipés avant le tissage, au moins un fil de guipage étant enroulé autour de chacun des fils lors du guipage.

La réalisation d'un guipage permet avantageusement d'augmenter encore la protection du fil lors des opérations de tissage.

Dans un exemple de réalisation, la structure fibreuse peut être obtenue après nappage d'une pluralité de textures fibreuses, au moins une desdites textures fibreuses comportant une pluralité de fils tels que définis plus haut.

La structure fibreuse peut encore être obtenue après mise en oeuvre d'un procédé de placement de fibres automatique (« Automated Fiber Placement ») utilisant une pluralité de fils tels que définis plus haut.

Le ou les fils selon l'invention peuvent avant d'être utilisés pour former la structure fibreuse subir une opération de craquage, le(s) fil(s) craqué(s) ainsi obtenu(s) subissant la ou les opération(s) textile(s) pour former la structure fibreuse.

Dans un exemple de réalisation, la structure fibreuse peut être obtenue par couture d'une pluralité de textures fibreuses à l'aide d'au moins un fil de couture formé par un fil tel que défini plus haut, ce fil étant éventuellement un fil craqué. Les textures fibreuses ainsi cousues peuvent ou non comporter des fils selon l'invention.

Dans un exemple de réalisation, le procédé peut comporter après mise en oeuvre de la ou des opérations textiles une étape d'élimination de tout ou partie du film recouvrant le revêtement d'interphase.

Une fois l'étape d'élimination du film réalisée, au moins 90%, de préférence au moins 95%, de la masse du film recouvrant les fibres peuvent avoir été éliminés.

Dans un exemple de réalisation, l'étape d'élimination du film peut être réalisée par soumission des fils à un traitement thermique, par exemple en imposant une température supérieure ou égale à 500°C, par exemple à 650°C, sous gaz neutre.

En variante, l'étape d'élimination du film peut être réalisée par mise en contact des fils avec un solvant apte à dissoudre le film, le solvant étant par exemple choisi parmi : l'acétone, le perchloroéthylène ou le dichlorométhane.

Dans un exemple de réalisation, il est possible d'éliminer le film en réalisant à la fois un traitement thermique ainsi qu'un traitement par un solvant.

La présente invention vise également un procédé de fabrication d'une pièce comportant une étape de formation d'une matrice dans la porosité d'une structure fibreuse obtenue après mise en oeuvre d'un procédé tel que défini plus haut.

La présente invention vise également une structure fibreuse comportant une pluralité de fils tels que définis plus haut.

La structure fibreuse peut, par exemple, être une structure tissée comportant une pluralité de fils tissés, les fils étant tels que définis plus haut.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente de manière schématique une vue en section d'un premier exemple de fil selon l'invention,
- la figure 2 représente de manière schématique une vue en section d'un deuxième exemple de fil selon l'invention,
- la figure 3 représente de manière schématique une vue en section d'un troisième exemple de fil selon l'invention,
- la figure 4 est un ordinogramme d'un exemple de procédé de fabrication d'un fil selon l'invention,
- la figure 4A représente une manière de déposer la composition d'ensimage sur un ensemble de fibres regroupées en fil utilisable dans le cadre de la présente invention,
- la figure 5 est un ordinogramme montrant diverses étapes pouvant être réalisées à partir de fils selon l'invention,
- la figure 6A est une photographie prise au microscope électronique à balayage d'un fil à base de fibres SiC revêtues d'un revêtement d'interphase,
- la figure 6B est une photographie prise au microscope électronique à balayage d'un fil selon l'invention, et
- la figure 7 est un résultat d'analyse thermogravimétrique d'une composition d'ensimage utilisable dans le cadre de l'invention.

### Description détaillée de modes de réalisation

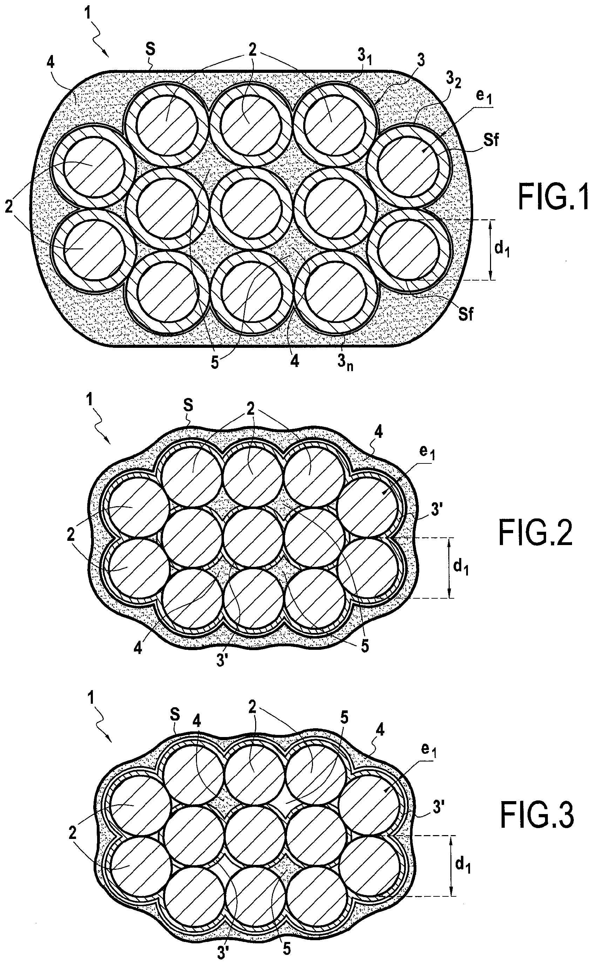

On a représenté à la figure 1 une section d'un fil 1 selon l'invention. Ce fil 1 présente un film 4 obtenu par traitement d'ensimage et est apte à subir une opération textile, par exemple de tissage. Le fil 1 comporte une pluralité de fibres 2 de carbure de silicium (SiC) et/ou de carbone. Les fibres SiC utilisables sont, par exemple, fournies sous la dénomination « Nicalon », « Hi-Nicalon » ou « Hi-Nicalon-S » par la société japonaise NGS ou « Tyranno SA3 » par la société UBE. Les fibres de carbone utilisables sont, par exemple, fournies sous la dénomination Torayca T300 3K par la société Toray.

Dans un exemple de réalisation, toutes les fibres du fil peuvent être des fibres de SiC. En variante, toutes les fibres du fil peuvent être des fibres de carbone. En variante encore, le fil peut comporter un mélange de fibres de SiC et de fibres de carbone.

Le diamètre d₁ des fibres 2, défini comme leur plus grande dimension transversale, peut par exemple être inférieur ou égal à 30µm. Pour des fibres de SiC, le diamètre des fibres peut, par exemple, être compris entre 8 µm et 25 µm. Pour des fibres de carbone, le diamètre des fibres peut, par exemple, être compris entre 7 µm et 10 µm. Les fibres 2 présentes dans le fil 1 peuvent ou non avoir le même diamètre.

Les fibres 2 présentent sur leur surface externe S_{f} un revêtement d'interphase 3. Le revêtement d'interphase 3 est, dans l'exemple illustré, au contact des fibres 2.

Dans l'exemple illustré, le revêtement d'interphase 3 est un revêtement d'interphase discontinu dans lequel il n'y a pas de continuité de matière entre les interphases 3₁, 3₂, ..., 3ₙ recouvrant chacune des fibres 2. Dans cet exemple de réalisation, les fibres ont d'abord été revêtues d'une interphase puis les fibres ainsi revêtues ont été regroupées en fil. Dans l'exemple illustré, les interphases 3₁, 3₂, ..., 3ₙ sont monocouches mais on ne sort pas du cadre de l'invention lorsque les interphases sont multicouches.

L'épaisseur e₁ du revêtement d'interphase 3 peut être supérieure ou égale à 50nm, de préférence à 200nm.

L'épaisseur e₁ du revêtement d'interphase 3 peut être inférieure ou égale à 1µm, de préférence à 600 nm. En particulier, l'épaisseur e₁ du revêtement d'interphase 3 peut être comprise entre 50nm et 1µm, de préférence entre 200nm et 600nm.

L'épaisseur e₁ du revêtement d'interphase 3 correspond à la plus grande dimension du revêtement d'interphase 3 mesurée perpendiculairement à la surface S_{f} des fibres 2.

Un film 4 comportant un polysiloxane à chaîne linéaire recouvre le revêtement d'interphase 3. Le film 4 est, dans l'exemple illustré, au contact du revêtement d'interphase 3.

Le film 4 assure la cohésion ainsi que le pontage des fibres 2 entre elles. Le film 4 forme un revêtement continu à la surface S du fil 1. Le film 4 est, comme illustré, aussi présent à l'intérieur du fil 1 dans sa porosité interne (i.e. dans les espaces 5 inter-fibres du fil 1). Dans l'exemple de la figure 1, une quantité suffisante de polysiloxane a été déposée pour que le film 4 soit présent dans chaque espace 5 inter-fibres du fil 1. Le fil 1 peut être tel que, sur au moins 50% de sa longueur, voire sur sensiblement la totalité de celle-ci, il y ait présence du film 4 dans chaque espace 5 inter-fibres du fil 1. L'obtention d'un tel film 4 peut résulter de la mise en oeuvre d'un rapport (masse de polysiloxane déposée)/(masse des fibres revêtues du revêtement d'interphase traitées) supérieur à environ 5%.

On a représenté à la figure 2 une variante de fil 1 selon l'invention. Dans cet exemple de réalisation, les fibres 2 ont d'abord été regroupées en fil puis le revêtement d'interphase 3' a été formé. Une fois le revêtement d'interphase 3' formé, le film 4 d'ensimage a été déposé. Comme dans l'exemple de réalisation de la figure 1, une quantité suffisante de polysiloxane a été déposée pour que le film 4 soit présent dans chaque espace 5 inter-fibres du fil 1.

On a représenté à la figure 3 une variante de fil 1 selon l'invention. A la différence des exemples de réalisation des figures 1 et 2, le polysiloxane a été déposé dans le cas de la figure 3 en une quantité insuffisante pour être présent dans chacun des espaces 5 inter-fibres du fil 1.

En modifiant la quantité de polysiloxane déposée sur les fibres, on peut avantageusement modifier les propriétés du fil obtenu. Ainsi, un fil obtenu après dépôt d'une quantité relativement faible de polysiloxane présentera une grande souplesse du fait d'un pontage relativement dispersé entre les fibres. Un fil obtenu après dépôt d'une quantité relativement élevée de polysiloxane présentera, quant à lui, une grande cohésion du fait de la forte liaison des fibres entre elles assurée par le film.

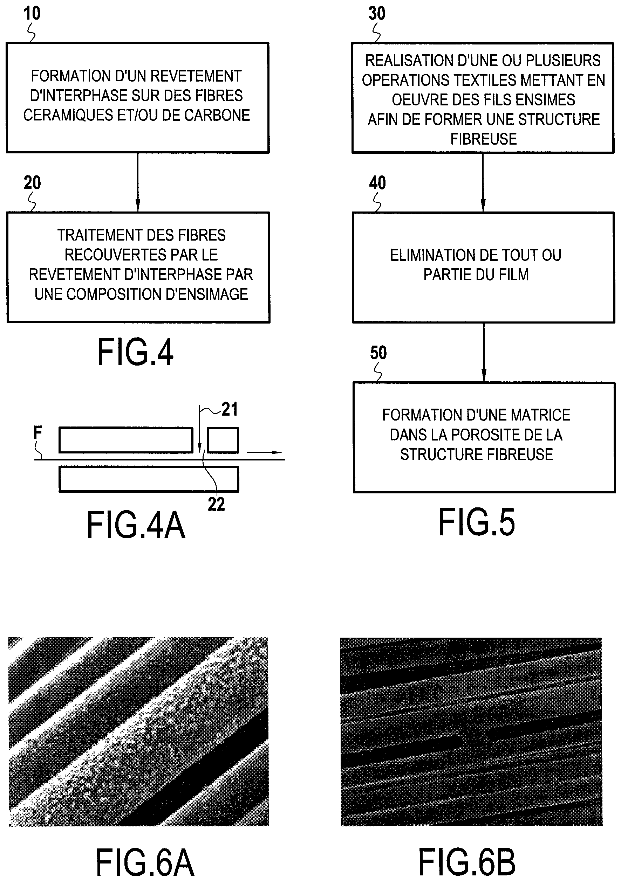

On a représenté à la figure 4 un ordinogramme montrant une succession d'étapes permettant de fabriquer un fil selon l'invention.

Dans une première étape (étape 10), on forme un revêtement d'interphase sur une pluralité de fibres céramiques et/ou de carbone. Le revêtement d'interphase peut être formé par tout procédé connu. Comme mentionné précédemment, le revêtement d'interphase peut être formé sur les fibres alors que celles-ci sont déjà regroupées en fil. En variante, une interphase est d'abord formée sur chacune des fibres puis celles-ci sont ensuite regroupées en fil.

Les fibres recouvertes par le revêtement d'interphase sont ensuite traitées par une composition d'ensimage (étape 20). La composition d'ensimage comporte un polysiloxane à chaîne linéaire. Durant l'étape 20, la composition d'ensimage est mise en contact avec les fibres recouvertes du revêtement d'interphase. Comme mentionné plus haut, le dépôt de la composition d'ensimage peut se faire par toute méthode connue comme le plein bain, le rouleau lécheur ou la pulvérisation. De préférence, le dépôt de la composition d'ensimage peut être réalisé par la méthode de plein bain ou du rouleau lécheur. De telles méthodes permettent avantageusement d'obtenir un dépôt homogène.

Une étape de séchage peut ensuite être effectuée, celle-ci permettant d'éliminer tout ou partie du solvant ou de l'eau initialement présents dans la composition d'ensimage.

La composition d'ensimage utilisée peut être telle que décrite plus haut et être déposée dans les proportions décrites plus haut. La composition d'ensimage peut, par exemple, être déposée à une température de 20°C.

On a représenté à la figure 4A une manière de déposer une composition d'ensimage sur des fibres utilisable dans le cadre de la présente invention. Dans cet exemple de réalisation, on fait défiler par rapport à une buse 22 des fibres recouvertes d'un revêtement d'interphase et regroupées en fil F. La composition d'ensimage 21 est déposée sur le fil F par injection au travers de la buse 22. Une fois ce dépôt réalisé, une étape de séchage peut être effectuée afin d'obtenir un fil selon l'invention.

On a représenté à la figure 5 un exemple de succession d'étapes réalisées à partir d'une pluralité de fils selon l'invention. Dans un premier temps, on réalise une ou plusieurs opérations textiles mettant en oeuvre une pluralité de fils selon l'invention afin de former une structure fibreuse (étape 30). Durant l'étape 30, une pluralité de fils selon l'invention peuvent par exemple être tissés entre eux afin de former une structure tissée. Plus généralement, les fils selon l'invention peuvent être mis en oeuvre dans tout métier textile pour réaliser toutes surfaces textiles.

Une fois la ou les opération(s) textile(s) effectuée(s), le film comportant le polysiloxane peut être éliminé (étape 40) par traitement thermique ou traitement par un solvant comme expliqué plus haut. Pour éliminer le film avec un solvant, on peut, tout d'abord immerger tout ou partie de la structure fibreuse dans un bain de solvant, par exemple pendant une heure à température ambiante ou à chaud puis effectuer un ou plusieurs rinçages à température ambiante avec le même solvant. Le solvant peut ensuite être évaporé à l'air et la structure fibreuse être ensuite séchée.

La structure fibreuse ainsi obtenue peut ensuite par exemple subir un traitement de consolidation et/ou de densification par une matrice connus de l'homme du métier (étape 50). Ces traitements peuvent aboutir à la formation d'une pièce dans laquelle la structure fibreuse est présente au sein d'une matrice, par exemple en céramique ou en carbone, et a une fonction de renfort mécanique.

La pièce ainsi formée peut, par exemple, constituer un élément d'arrière-corps de moteur d'avion, par exemple un carter d'échappement, un cône d'échappement (« plug ») ou une tuyère secondaire. La pièce ainsi formée peut encore constituer un élément de moteur d'avion, par exemple un anneau, un distributeur ou une aube.

### Exemples

### Exemple 1 (invention)

Cet exemple est relatif au traitement d'ensimage effectué dans le cadre de l'invention.

Des fibres de SiC fournies sous la dénomination Hi Nicalon type S par la société NGS ont été utilisées. Ces fibres ont été recouvertes par un revêtement d'interphase d'une épaisseur de 500 nm. Une photographie du fil comportant ces fibres revêtues est donnée à la figure 6A.

Le fil formé par les fibres de SiC ainsi revêtues a alors été traité par une composition d'ensimage. Une composition d'ensimage se présentant sous la forme d'une émulsion comportant une phase huileuse dispersée dans de l'eau a été utilisée. La phase huileuse est constituée d'une huile Bluesil™ 47V1000 de viscosité 1000 mm²/s, cette huile comporte un poly(diméthylsiloxane) à chaîne linéaire.

Plusieurs essais ont été réalisés en faisant varier la quantité de PDMS déposée sur le fil comme indiqué au tableau 1 ci-dessous. Quelques soient les quantités déposées, une bonne souplesse et une bonne tissabilité ont été obtenues.

**Tableau 1**

| % massique PDMS déposé sur fil | aspect du fil | |
|---|---|---|
| **8,0** | souple | pontage entre fibres |
| **6,0** | souple | pontage entre fibres |
| **3,0** | souple | pontage entre fibres |
| **2,0** | souple | pontage entre fibres |
| **1,0** | souple | absence de pontage |
| **0,7** | souple | absence de pontage |
| **0,5** | souple | absence de pontage |
| **0,3** | souple | absence de pontage |

Dans ces essais, la composition d'ensimage a été appliquée à 20°C par les méthodes de plein bain ou du rouleau lécheur « recto/verso » (i.e. deux rouleaux lécheurs successifs permettant de déposer l'ensimage des deux côtés du fil). Le temps de contact du fil avec l'émulsion n'a pas dépassé 3 secondes dans la méthode de plein bain et 2 secondes environ dans la méthode du rouleau lécheur (soit 4 secondes au maximum pour cette méthode).

Les fils ainsi traités ont été séchés par passage dans un four de séchage d'environ 1 m imposant une température comprise entre 120°C et 250°C.

Par ailleurs, on a fourni à la figure 6B une photographie d'un fil selon l'invention dans lequel la masse déposée de PDMS rapportée à la masse de fibres traitées est de 1%. La dépose d'ensimage est homogène et le revêtement d'interphase est protégé.

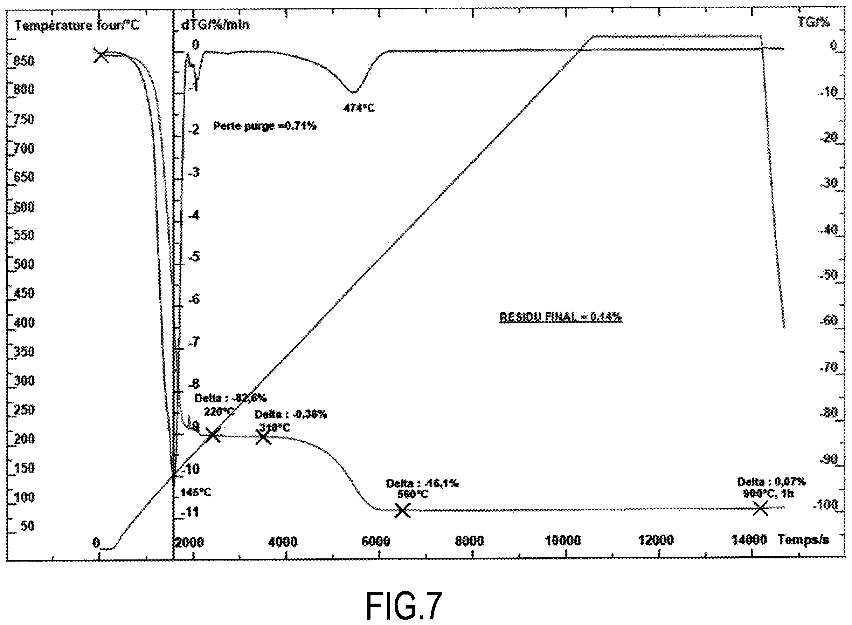

En outre, la composition d'ensimage utilisée pour former le film protecteur peut quasiment totalement être éliminée (>99,5%) par voie thermique (voir la figure 7 montrant l'élimination thermique de la composition d'ensimage utilisée pour former le revêtement d'ensimage : résultat d'analyse thermogravimétrique jusqu'à 900°C sous atmosphère neutre relatif à une émulsion de PDMS de concentration 20% massique).

### Exemple 2 (comparatif)

Les performances d'un fil selon l'invention obtenu à l'exemple 1 (fil 1) ont été notamment comparées avec les performances d'un fil obtenu après un traitement d'ensimage avec une composition comportant de l'alcool polyvinylique (PVA) au lieu du poly(diméthylsiloxane) à chaîne linéaire (fil 2).

Le fil 2 a été fabriqué de la même manière que le fil 1 à l'exception du traitement d'ensimage lequel a mis en oeuvre une composition à base de PVA au lieu de l'émulsion à base de PDMS.

Les résultats obtenus sont donnés au tableau 2 ci-dessous. Le fil 2 ne donne pas entière satisfaction dans la mesure où il présente un caractère rigide ainsi qu'une tissabilité non satisfaisante.

Comme indiqué au tableau 2 ci-dessous d'autres compositions d'ensimage ont été testées à savoir la composition de nom commercial Avirol KW79 fournie par la société Pulcra Chemicals et la composition de nom commercial Hydrolube 763 (notée HL763) fournie par la société Michelman. Ces compositions ne permettent pas d'obtenir des fils présentant une bonne tissabilité ou un revêtement d'interphase protégé.

**Tableau 2**

| Type d'ensimage | taux déposé sur fil | aspect du fil | cohésion du fil | tissabilité | dépose ensimage |
|---|---|---|---|---|---|
| **KW79** | 0,8%m | bon | bonne | pas satisfaisante | hétérogène |
| **HL763** | 0,6%m | bon | bonne | pas satisfaisante | hétérogène |
| **ensimage base PVA Hi Nicalon type S (fil 2)** | 1,2%m | rigide | bonne | pas satisfaisante | correct |
| **Emulsion huile 47V1000 (fil 1)** | 1%m | souple | très bonne | satisfaisante | homogène |

L'expression « comportant/contenant un(e) » doit se comprendre comme « comportant/contenant au moins un(e) ».

L'expression « compris(e) entre ... et ... » ou « allant de ... à ... » doit se comprendre comme incluant les bornes.

## Revendications

1. Fil (1) ensimé destiné à subir une opération textile comportant une pluralité de fibres (2) céramiques et/ou de carbone, et un revêtement d'interphase (3 ; 3') recouvrant les fibres (2),
**caractérisé en ce que** le fil comporte un film (4) recouvrant le revêtement d'interphase (3 ; 3') comportant un polysiloxane à chaîne linéaire.

2. Fil (1) selon la revendication 1, **caractérisé en ce que** le revêtement d'interphase (3 ; 3') comporte du carbone pyrolytique, du carbone dopé au bore ou du BN.

3. Fil (1) selon l'une quelconque des revendications 1 et 2, **caractérisé en ce que** le rapport [masse de polysiloxane]/[masse des fibres + masse du revêtement d'interphase] est supérieur ou égal à 0,3%.

4. Fil (1) selon l'une quelconque des revendications 1 à 3, **caractérisé en ce que** le polysiloxane est un poly(diméthylsiloxane) à chaîne linéaire.

5. Fil (1) selon l'une quelconque des revendications 1 à 4, **caractérisé en ce que** les fibres (2) comportent des fibres de SiC.

6. Procédé de préparation d'un fil (1) selon l'une quelconque des revendications 1 à 5, comportant une étape de traitement par une composition d'ensimage d'une pluralité de fibres (2) céramiques et/ou de carbone recouvertes d'un revêtement d'interphase (3 ; 3'), la composition d'ensimage comportant un polysiloxane à chaîne linéaire.

7. Procédé selon la revendication 6, **caractérisé en ce que** les fibres (2) présentent, avant le traitement par la composition d'ensimage, un revêtement d'ensimage initial, le revêtement d'ensimage initial étant éliminé en tout ou partie avant le traitement par la composition d'ensimage.

8. Procédé de fabrication d'une structure fibreuse dans lequel une ou plusieurs opérations textiles mettant en oeuvre au moins un fil (1) selon l'une quelconque des revendications 1 à 5 sont réalisées.

9. Procédé selon la revendication 8 dans lequel une structure tissée est fabriquée par tissage d'une pluralité de fils (1) selon l'une quelconque des revendications 1 à 5.

10. Procédé selon la revendication 9, **caractérisé en ce que** les fils (1) sont guipés avant le tissage, au moins un fil de guipage étant enroulé autour de chacun des fils (1) lors du guipage.

11. Procédé selon l'une quelconque des revendications 8 à 10, **caractérisé en ce qu'**il comporte après mise en oeuvre de la ou des opérations textiles une étape d'élimination de tout ou partie du film (4) recouvrant le revêtement d'interphase (3 ; 3').

12. Procédé de fabrication d'une pièce comportant une étape de formation d'une matrice dans la porosité d'une structure fibreuse obtenue après mise en oeuvre d'un procédé selon l'une quelconque des revendications 8 à 11.

13. Structure fibreuse comportant une pluralité de fils (1) selon l'une quelconque des revendications 1 à 5.

## Patentansprüche

1. Geschlichtetes Garn (1), das dazu bestimmt ist, einem textilen Arbeitsschritt unterzogen zu werden, umfassend eine Vielzahl von Keramik- und/oder Kohlenstofffasern (2), und eine Zwischenphasenbeschichtung (3; 3'), welche die Fasern (2) bedeckt,
**dadurch gekennzeichnet, dass** das Garn einen die Zwischenphasenbeschichtung (3; 3') bedeckenden Film (4) aufweist, der ein geradkettiges Polysiloxan umfasst.

2. Garn (1) nach Anspruch 1, **dadurch gekennzeichnet, dass** die Zwischenphasenbeschichtung (3; 3') pyrolytischen Kohlenstoff, mit Bor dotierten Kohlenstoff oder BN enthält.

3. Garn (1) nach einem der Ansprüche 1 und 2, **dadurch gekennzeichnet, dass** das Verhältnis [Polysiloxanmasse]/[Masse der Fasern + Masse der Zwischenphasenbeschichtung] größer als oder gleich 0,3 % ist.

4. Garn (1) nach einem der Ansprüche 1 bis 3, **dadurch gekennzeichnet, dass** das Polysiloxan ein geradkettiges Poly(dimethylsiloxan) ist.

5. Garn (1) nach einem der Ansprüche 1 bis 4, **dadurch gekennzeichnet, dass** die Fasern (2) SiC-Fasern umfassen.

6. Verfahren zur Herstellung eines Garns (1) nach einem der Ansprüche 1 bis 5, umfassend einen Schritt zur Behandlung einer Vielzahl von Keramik- und/oder Kohlenstofffasern (2), die mit einer Zwischenphasenbeschichtung (3; 3') überzogen sind, mit einer Schlichtezusammensetzung, wobei die Schlichtezusammensetzung ein geradkettiges Polysiloxan umfasst.

7. Verfahren nach Anspruch 6, **dadurch gekennzeichnet, dass** die Fasern (2) vor der Behandlung mit der Schlichtezusammensetzung einen Anfangsschlichteüberzug aufweisen, wobei der Anfangsschlichteüberzug vor der Behandlung mit der Schlichtezusammensetzung teilweise oder in Gänze entfernt wird.

8. Verfahren zur Herstellung einer Faserstruktur, bei dem ein oder mehrere textile Arbeitsschritte, die wenigstens ein Garn (1) nach einem der Ansprüche 1 bis 5 verwenden, durchgeführt werden.

9. Verfahren nach Anspruch 8, bei dem eine gewebte Struktur durch Weben einer Vielzahl von Garnen (1) nach einem der Ansprüche 1 bis 5 hergestellt wird.

10. Verfahren nach Anspruch 9, **dadurch gekennzeichnet, dass** die Garne (1) vor dem Weben umsponnen werden, wobei während des Umspinnens wenigstens ein Umspinnungsfaden um jedes der Garne (1) gewickelt wird.

11. Verfahren nach einem der Ansprüche 8 bis 10, **dadurch gekennzeichnet, dass** es nach Durchführung des oder der textilen Arbeitsschritte einen Schritt zum Entfernen des gesamten die Zwischenphasenbeschichtung (3; 3') bedeckenden Films (4) oder eines Teils dessen umfasst.

12. Verfahren zur Herstellung eines Teils, umfassend einen Schritt zum Ausbilden einer Matrix in der Porosität einer Faserstruktur, die nach der Durchführung eines Verfahrens nach einem der Ansprüche 8 bis 11 erhalten wird.

13. Faserstruktur, die eine Vielzahl von Garnen (1) nach einem der Ansprüche 1 bis 5 umfasst.

## Claims

1. A sized yarn (1) for subjecting to a textile operation, the yarn comprising a plurality of ceramic and/or carbon fibers (2), and an interphase coating (3; 3') covering the fibers (2),
**characterized in that** the yarn comprises a film (4) covering the interphase coating (3; 3') and including a linear polysiloxane.

2. A yarn (1) according to claim 1, **characterized in that** the interphase coating (3; 3') includes pyrolytic carbon, boron-doped carbon, or BN.

3. A yarn (1) according to claim 1 or claim 2, **characterized in that** the ratio [weight of polysiloxane]/[weight of fibers + weight of interphase coating] is greater than or equal to 0.3%.

4. A yarn (1) according to any one of claims 1 to 3, **characterized in that** the polysiloxane is a linear poly(dimethylsiloxane).

5. A yarn (1) according to any one of claims 1 to 4, **characterized in that** the fibers (2) include SiC fibers.

6. A method of preparing a yarn (1) according to any one of claims 1 to 5, including a step of treating a plurality of ceramic and/or carbon fibers (2) covered in an interphase coating (3; 3') with a sizing composition, the sizing composition including a linear polysiloxane.

7. A method according to claim 6, **characterized in that**, prior to the treatment with the sizing composition, the fibers (2) present an initial sizing coating, the initial sizing coating being eliminated in full or in part prior to the treatment with the sizing composition.

8. A method of fabricating a fiber structure wherein one or more textile operations are performed using at least one yarn (1) according to any one of claims 1 to 5.

9. A method according to claim 8, wherein a woven structure is fabricated by weaving a plurality of yarns (1) according to any one of claims 1 to 5.

10. A method according to claim 9, **characterized in that** the yarns (1) are wrapped before weaving, at least one wrapping yarn being wound around each of the yarns (1) during wrapping.

11. A method according to any one of claims 8 to 10, **characterized in that**, after performing the textile operation(s), the method includes a step of eliminating all or part of the film (4) covering the interphase coating (3; 3').

12. A method of fabricating a part including a step of forming a matrix in the pores of a fiber structure obtained after performing the method according to any one of claims 8 to 11.

13. A fiber structure including a plurality of yarns (1) according to any one of claims 1 to 5.
